# EUROPEAN PATENT SPECIFICATION

(11) **EP 3 232 693 B1**
(45) Date of publication and mention of the grant of the patent: **22.04.2020**
(21) Application number: 15868485.2
(22) Date of filing: 04.08.2015
(51) Int. Cl.: H04W 4/70, H04W 4/00, H04L 29/08

(54) **METHOD AND DEVICE FOR CREATING APPLICATION NOTIFICATION RESOURCE**
VERFAHREN UND VORRICHTUNG ZUR ERZEUGUNG VON ANWENDUNGSBENACHRICHTIGUNGSRESSOURCEN
PROCÉDÉ ET DISPOSITIF POUR CRÉER UNE RESSOURCE DE NOTIFICATION D'APPLICATION

(30) Priority: 09.12.2014 CN 201410749294
(43) Date of publication of application: 18.10.2017
(73) Proprietor: ZTE Corporation, Shenzhen City, Guangdong 518057 (CN)
(72) Inventor: WU, Hao, Shenzhen Guangdong 518057 (CN)
(74) Representative: Mozzi, Matteo
(86) International application number: PCT/CN2015/086051
(87) International publication number: WO 2016/090933

(56) References cited:
- WO-A1-2012/069997
- WO-A1-2014/037054
- WO-A1-2014/109597
- CN-A- 103 299 601
- CN-A- 104 093 118
- US-A1- 2013 203 394
- 'European Telecommunications Standards Institute. ''ETSI TS 102 690 V2.1.1'' Machine-to-Machine communications (M2M);' FUNCTIONAL ARCHITECTURE 31 October 2013, pages 1 - 332, XP055392018

## Description

### Technical Field

The present disclosure relates to the field of communications, and in particular to a method and device for creating an application announcement resource.

### Background

A Machine-to-Machine (M2M) communication network consists of M2M nodes and a bearer network. The M2M nodes may communicate with one another through the bearer network. An M2M node may at least include an Application Entity (AE) or a Common Service Entity (CSE). The AE is a logical unit that executes a practical M2M application. The CSE is a logical unit that manages and serves the application.

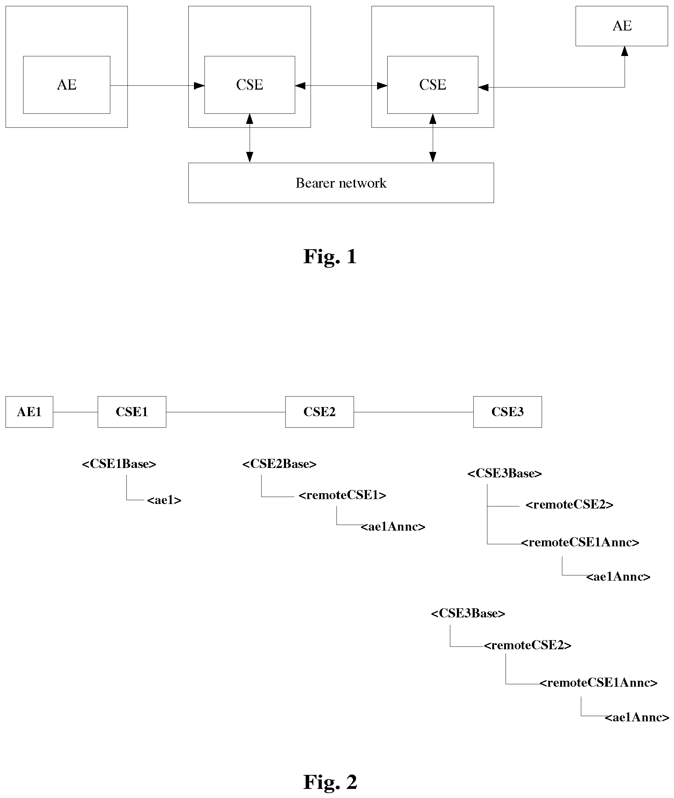

Communication between M2M applications may be implemented by interaction between CSEs. The M2M applications may be connected to the respective CSEs through an X interface, and different CSEs may communicate with one another through a Y interface. A precondition for communication between M2M applications is that: each M2M application may need to be registered on a local CSE before the communication of the M2M applications can be implemented by the interaction between the CSEs. Fig. 1 is a schematic diagram of architecture of an M2M system according to a related M2M technology. As shown in Fig. 1, in the architecture of the M2M system, an application node is an execution program in a device, and may be, for example, an intelligent electric meter, a temperature measurement and control sensor, a fire alarm or an intelligent home appliance. A middle node is middleware that connects the terminal node for execution to a network-side server. For example, the middle node may be a gateway. An infrastructure node may be a network-side server.

An AE may join an M2M network after being registered on a CSE in a middle node, so that the AE can serve as an application node of an M2M system. In such a case, the CSE in the middle node is called as a registration CSE or local CSE of the AE, and a CSE in an infrastructure node is called as a remote CSE of the AE.

In a practical application process, a related resource of an AE on an application node is required to be registered on a CSE in the application node, but is not required to be registered on a CSE in a middle node and a CSE in an infrastructure node. In a related M2M technology, for example, when an application on an infrastructure node is expected to search for an application on an application node, a query request needs to be sent to all middle nodes connected to the infrastructure node, and the middle nodes forward the query request to each application node. When this technical scheme is adopted, not only network resources are greatly consumed, but also relatively long time is required to be consumed.

In order to facilitate an AE on a middle node to find a resource on an application node, a resource announcement manner may be used. According to the resource announcement manner, an announcement resource corresponding to an original resource on the application node is created on the middle node. The announcement resource has a search tag the same as that of the original resource, and also has a link of the original resource, so that an application on the middle node can conveniently find a required resource and access the original resource according to the link. The original resource may also create an attribute "announce to" used for storing address information of the announcement resource which is successfully created.

Under a mechanism adopted in the related M2M technology, an announced resource is still kept in a structure equivalent to that of an original resource. For example, a resource <ae> has a sub-resource <container>. Then after <container> is announced, a resource <containerAnnc> (which is an announcement resource corresponding to the original resource <container>) on a remote CSE should be stored under a resource <aeAnnc>. This is an implementation mode in an ideal state, and in other words, a precondition for this ideal state is that <ae> is considered to be announced at first.

However, in a practical application process, an AE may be very likely to announce a <container> resource which stores generated data of the AE only rather than to announce its own information, which may make it possible that an originally defined parent resource corresponding to <container> cannot be found on a remote CSE to finally cause an announcement failure.

Fig. 2 is a schematic diagram of a resource announcement process according to the related resource announcement technology. As shown in Fig. 2, each CSE has a general root directory <CSEBase>, and all resources managed by the CSE are created under this root directory. A specific creation process may include the following acts.

At first, AE1 is registered on CSE1, and after a successful registration, the CSE1 creates a resource <ae1> for the AE1 under a root directory <CSE1Base>.

Then, the CSE1 is registered on CSE2, and after a successful registration, the CSE2 creates a resource <remoteCSE1> for the CSE1.

Next, the CSE2 is registered on CSE3, and after a successful registration, the CSE3 creates a resource <remoteCSE2> for the CSE2.

In addition, there is no registration relationship between the CSE1 and the CSE3, but the CSE2 may announce the CSE1 to the CSE3. Therefore, the CSE3 may create an announcement resource <remoteCSE1Annc> for the CSE1, and this announcement resource may be created in any of the following two manners.

In a first manner, the announcement resource is directly created under a root directory <CSE3Base> of the CSE3.

In a second manner, the announcement resource is created under <remoteCSE2>.

Moreover, the AE1 may also request the CSE1 to announce the AE1 to the CSE3, and an announcement resource of the AE1 is created under <remoteCSE1Annc>.

It may be concluded from the above that resource announcement in the related resource announcement technology is limited by whether a parent resource has been announced or not and therefore is inflexible.
WO 2014/037054 A1 provides a method and system for communication between machine to machine (M2M) service provider networks.

### Summary

Some embodiments of the present disclosure provide a method and device for creating an application announcement resource, so as to at least solve the problem that resource announcement in the related resource announcement technology is limited by whether a parent resource has been announced or not and therefore is inflexible.

In accordance with an aspect of the present disclosure, there is provided a method and a device as defined by the independent claims 1 and 4.

Other aspects of the present disclosure are defined in the dependent claims.

### Brief Description of the Drawings

The drawings described here are adopted to provide a further understanding to the present disclosure, and form a part of the present disclosure. Schematic embodiments of the present disclosure and descriptions thereof are adopted to explain the present disclosure and not intended to form limits to the present disclosure. In the drawings:
Fig. 1 is a schematic diagram of architecture of an M2M system according to the related resource announcement technology;
Fig. 2 is a schematic diagram of a resource announcement process according to the related resource announcement technology;
Fig. 3 is a flowchart of a method for creating an application announcement resource according to an embodiment of the present disclosure;
Fig. 4 is a structure block diagram of a device for creating an application announcement resource according to an embodiment of the present disclosure; and
Fig. 5 is a structure block diagram of a device for creating an application announcement resource according to an exemplary embodiment of the present disclosure.

### Detailed Description of the Embodiments

The present disclosure will be described below in detail with reference to the drawings and embodiments. It may be appreciated that the embodiments in the present disclosure and characteristics in the embodiments may be combined under the condition of no conflicts.

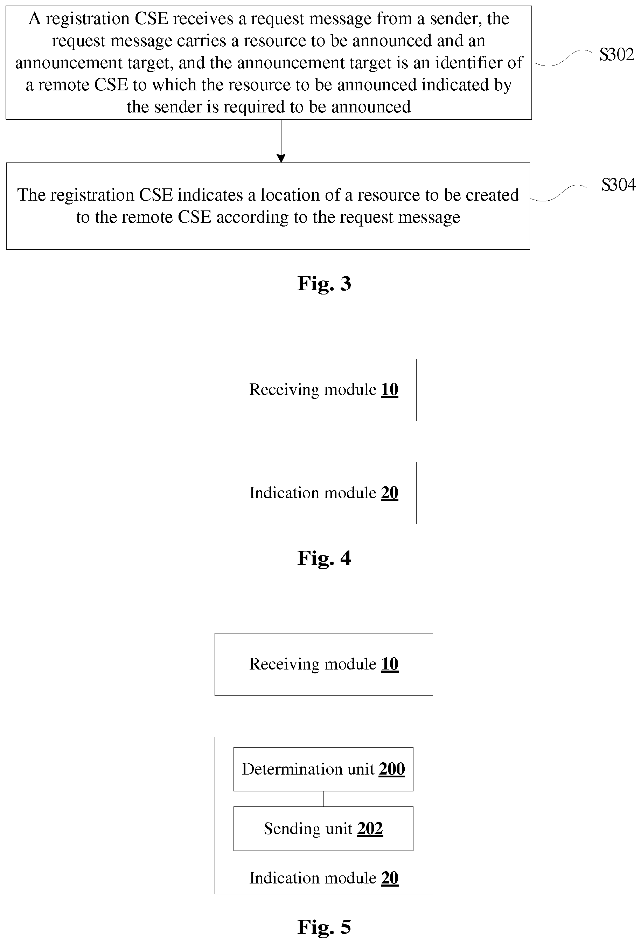

Fig. 3 is a flowchart of a method for creating an application announcement resource according to an embodiment of the present disclosure. As shown in Fig. 3, the method may include the following processing acts S302 to S304.

At act S302, a registration CSE receives a request message from a sender. The request message carries a resource to be announced and an announcement target, and the announcement target is an identifier of a remote CSE to which the resource to be announced indicated by the sender is required to be announced.

At act S304, the registration CSE indicates a location of a resource to be created to the remote CSE according to the request message.

Resource announcement in the related resource announcement technology is required to be limited by whether a parent resource has been announced or not and therefore is inflexible. With adoption of the method shown in Fig. 3, the registration CSE receives the request message from the sender, and further indicates the location of the resource to be created to the remote CSE according to the identifier, indicated by the sender, of the remote CSE to which the resource to be announced is required to be announced to in the request message. In this way, the problem that resource announcement in the related resource announcement technology is required to be limited by whether the parent resource is announced or not and therefore is inflexible is solved, and announcement flexibility is further ensured.

It should be noted that a registration relationship may exist between the sender and the registration CSE.

In an exemplary embodiment, at act S304, the operation that the registration CSE indicates the location of the resource to be created to the remote CSE according to the request message may include the following operations.

At S1, the registration CSE determines the location of the resource to be created. A determination condition for determining the location of the resource to be created may include at least one of the following three conditions.

A first condition is whether a registration relationship exists between the registration CSE and the remote CSE or not.

A second condition is whether a registration relationship exists between the registration CSE and the remote CSE or not and whether a resource root directory of the registration CSE includes an "announce to" attribute or not.

A third condition is whether a registration relationship exists between the registration CSE and the remote CSE or not, whether a resource root directory of the registration CSE includes an "announce to" attribute or not and whether the "announce to" attribute includes address information corresponding to the remote CSE or not.

At S2, the registration CSE sends a resource creation request message which carries the determined location of the resource to be created to the remote CSE.

In an exemplary embodiment, in S1, the operation that the registration CSE determines the location of the resource to be created may include the following operations.

At S11, the registration CSE determines that a registration relationship exists between the registration CSE and the remote CSE.

At S12, the registration CSE sets the location of the resource to be created as address information of a resource created when the registration CSE is registered on the remote CSE.

As an exemplary implementation mode of the present disclosure, an application scenario mentioned in Fig. 2 may be continuously adopted. AE1 sends a resource updating request message or a resource creation request message to CSE1. A parameter carried in the resource updating request message or the resource creation request message may include, but is not limited to: an announcement target, which may be e.g. an identifier, indicated by the AE1, of a CSE to which the AE1 is announced and is set to be, for example, CSE3 in the present exemplary embodiment. After receiving the resource updating request message or resource creation request message from the AE1, the CSE1 checks whether there locally exists a resource, created for the CSE3, of a <remoteCSE> type or not to accordingly judge whether there exists a registration relationship between the CSE1 and the CSE3 or not. If the resource, created for the CSE3, of the <remoteCSE> type exists (that is, there exists a registration relationship between the CSE1 and the CSE3), a resource creation request may be sent to the CSE3. A parameter "to" (arranged to indicate a location of a newly created resource to the CSE receiving the request message) in the resource creation request is set to be "CSE3Base/remoteCSE1", i.e. address information of a resource created when the CSE1 is registered on the CSE3.

In an exemplary embodiment, in S1, the operation that the registration CSE determines the location of the resource to be created may include the following operations.

At S13, the registration CSE determines that no registration relationship exists between the registration CSE and the remote CSE, and a resource root directory of the registration CSE does not include an "announce to" attribute.

At S14, the registration CSE sets the location of the resource to be created as address information of a root directory resource on the remote CSE.

In the exemplary embodiment, after receiving the resource updating request message or resource creation request message from AE1, the CSE1 checks whether there locally exists the resource, created for CSE3, of the <remoteCSE> type or not to accordingly judge whether there exists a registration relationship between the CSE1 and the CSE3 or not. If the resource, created for CSE, of the <remoteCSE> type does not exist (that is, there does not exist a registration relationship between the CSE1 and the CSE3), it may be suggested to continue checking whether <CSE1Base> includes an "announce to" attribute or not. If the "announce to" attribute is not included, the resource creation request may be sent to the CSE3. A parameter "to" in the resource creation request is set to be "CSE3Base", i.e. address information of a root directory resource of the CSE3.

In an exemplary embodiment, in S1, the operation that the registration CSE determines the location of the resource to be created may include the following operations:
At S15, the registration CSE determines that no registration relationship exists between the registration CSE and the remote CSE, a resource root directory of the registration CSE includes an "announce to" attribute and the "announce to" attribute does not include address information corresponding to the remote CSE.

At S16, the registration CSE sets the location of the resource to be created as address information of a root directory resource on the remote CSE.

In the exemplary embodiment, after receiving the resource updating request message or resource creation request message from the AE1, the CSE1 checks whether there locally exists the resource, created for the CSE3, of the <remoteCSE> type or not to accordingly judge whether there exists a registration relationship between the CSE1 and the CSE3 or not. If the resource, created for CSE, of the <remoteCSE> type does not exist (that is, there does not exist a registration relationship between the CSE1 and the CSE3), it may be suggested to continue checking whether <CSE1Base> includes the "announce to" attribute or not. If the "announce to" attribute is included, whether the "announce to" attribute includes an address related to the CSE3 or not is checked, the address representing an address of an announcement resource, created by CSE3 after the CSE1 is announced to the CSE3, of the CSE1. For example, "CSE3Base/remoteCSE2/remoteCSE1Annc" or "CSE3Base/remoteCSE1Annc" is the address related to the CSE3. Since a first part (CSE3Base) of the address includes the identifier or address of the CSE3, this part may be checked to judge whether the address related to CSE3 is included or not. For example, CSE3Base is CSE3-ID.chinamobile.com. If the "announce to" attribute does not include the address related to the CSE3, the resource creation request may be sent to the CSE3. A parameter "to" in the resource creation request is set to be "CSE3Base", i.e. an address of the root directory resource of the CSE3.

In an exemplary embodiment, in S1, the operation that the registration CSE determines the location of the resource to be created may include the following operations.

At S17, the registration CSE determines that no registration relationship exists between the registration CSE and the remote CSE, a resource root directory of the registration CSE includes an "announce to" attribute and the "announce to" attribute includes address information corresponding to the remote CSE.

At S18, the registration CSE sets the location of the resource to be created as address information of an announcement resource created when the registration CSE is announced to the remote CSE.

In the exemplary embodiment, after receiving the resource updating request message or resource creation request message from AE1, the CSE1 checks whether there locally exists the resource, created for the CSE3, of the <remoteCSE> type or not to accordingly judge whether there exists a registration relationship between the CSE1 and the CSE3 or not. If the resource, created for CSE, of the <remoteCSE> type does not exist (that is, there does not exist a registration relationship between the CSE1 and the CSE3), it may be suggested to continue checking whether <CSE1Base> includes the "announce to" attribute or not. If the "announce to" attribute is included, whether the "announce to" attribute includes the address related to the CSE3 or not is checked, the address representing the address of the announcement resource, created by CSE3 after the CSE1 is announced to the CSE3, of the CSE1. For example, "CSE3Base/remoteCSE2/remoteCSE1Annc" or "CSE3Base/remoteCSE1Annc" is the address related to the CSE3. Since the first part (CSE3Base) of the address includes the identifier or address of CSE3, this part may be checked to judge whether the address related to the CSE3 is included or not. For example, CSE3Base is CSE3-ID.chinamobile.com. If the "announce to" attribute includes the address related to the CSE3, the resource creation request may be sent to the CSE3. A parameter "to" in the resource creation request is set to be the address related to the CSE3 in the "announce to" attribute of <CSE1Base>, for example, "CSE3Base/remoteCSE2/remoteCSE1Annc" or "CSE3Base/remoteCSE1Annc".

In an exemplary embodiment, the method may further include the following processing operations.

At S3, the registration CSE sends the resource creation request message which further carries original resource address information to the remote CSE. The original resource address information indicates (is indicative of) an address of an original resource to be announced.

At S4, the remote CSE checks whether there locally exists a resource with an attribute original resource link the same as the original resource address information carried in the resource creation request message or not, after receiving the resource creation request message.

At S5, when there locally exists such resource, the remote CSES sends a resource creation response message to the registration CSE. The resource creation response message indicates (is indicative of) that the resource to be created already exists.

At S6, when there does not locally exist such resource, the remote CSE creates the resource according to the location, indicated in the resource creation request message, of the resource to be created.

As another exemplary embodiment of the present disclosure, the resource creation request sent by the CSE1 may further contain a parameter "original resource address" used for indicating the address of the original resource <ae1>. After receiving the request message, the CSE3 may create a resource at a specified location according to a setting of the parameter "to". Alternatively, after receiving the request message, the CSE3 reads a value of the parameter "original resource address", and checks whether there exists, in local resources, a resource with an attribute "original resource address" of which a value is the same as the value of the parameter "original resource address" or not. The CSE3 may sent a resource creation response message to the CSE1 if there exists such resource, the response message indicating a creation failure and a response state code being set to be "existing". If there does not exist such resource, the CSE3 creates the resource at the specified location according to the setting of the parameter "to".

Fig. 4 is a structure block diagram of a device for creating an application announcement resource according to an embodiment of the present disclosure. The device may be applied to a registration CSE. As shown in Fig. 4, the device for creating the application announcement resource may include a receiving module 10 and an indication module 20. The receiving module 10 is arranged to receive a request message from a sender. The request message carries a resource to be announced and an announcement target, and the announcement target is an identifier of a remote CSE to which the resource to be announced indicated by the sender is required to be announced. The indication module 20 is arranged to indicate a location of a resource to be created to the remote CSE according to the request message.

With adoption of a device shown in Fig. 4, the problem that resource announcement in the related resource announcement technology is required to be limited by whether a parent resource has been announced or not and therefore is inflexible is solved, and announcement flexibility is further ensured.

In an exemplary embodiment, as shown in Fig. 5, the indication module 20 may include a determination unit 200 and a sending unit 202. The determination unit 200 is arranged to determine the location of the resource to be created. A determination condition for determining the location of the resource to be created includes at least one of: whether a registration relationship exists between the registration CSE and the remote CSE or not; whether a registration relationship exists between the registration CSE and the remote CSE or not and whether a resource root directory of the registration CSE includes an "announce to" attribute or not; or whether a registration relationship exists between the registration CSE and the remote CSE or not, whether a resource root directory of the registration CSE includes an "announce to" attribute or not and whether the "announce to" attribute includes address information corresponding to the remote CSE or not. The sending unit 202 is arranged to send a resource creation request message which carries the determined location of the resource to be created to the remote CSE.

In an exemplary embodiment, the determination unit 200 may include a first determination subunit (not shown in the figure) and a first setting subunit (not shown in the figure). The first determination subunit is arranged to determine that a registration relationship exists between the registration CSE and the remote CSE. The first setting subunit is arranged to set the location of the resource to be created as address information of a resource created when the registration CSE is registered on the remote CSE.

In an exemplary embodiment, the determination unit 200 may include a second determination subunit (not shown in the figure) and a second setting subunit (not shown in the figure). The second determination subunit is arranged to determine that no registration relationship exists between the registration CSE and the remote CSE and a resource root directory of the registration CSE does not include an "announce to" attribute. The second setting subunit is arranged to set the location of the resource to be created as address information of a root directory resource on the remote CSE.

In an exemplary embodiment, the determination unit 200 may include a third determination subunit (not shown in the figure) and a third setting subunit (not shown in the figure). The third determination subunit is arranged to determine that no registration relationship exists between the registration CSE and the remote CSE, a resource root directory of the registration CSE includes an "announce to" attribute and the "announce to" attribute does not include address information corresponding to the remote CSE. The third setting subunit is arranged to set the location of the resource to be created as address information of a root directory resource on the remote CSE.

In an exemplary embodiment, the determination unit 200 may include a fourth determination subunit (not shown in the figure) and a fourth setting subunit (not shown in the figure). The fourth determination subunit is arranged to determine that no registration relationship exists between the registration CSE and the remote CSE, a resource root directory of the registration CSE includes an "announce to" attribute and the "announce to" attribute includes address information corresponding to the remote CSE. The fourth setting subunit is arranged to set the location of the resource to be created as address information of an announcement resource created when the registration CSE is announced to the remote CSE.

From the above descriptions, it can be seen that the embodiments achieve the following technical effects (it may be appreciated that these effects are effects which may be achieved by some exemplary embodiments). With adoption of the technical solutions provided by the embodiments of the present disclosure, the registration CSE receives the request message from the sender, and further indicates the location of the resource to be created to the remote CSE according to the identifier, indicated by the sender, of the remote CSE to which the resource to be announced is required to be announced to in the request message. In this way, the problem that resource announcement in the related resource announcement technology is required to be limited by whether the parent resource is announced or not and therefore is inflexible is solved, and announcement flexibility is further ensured.

Obviously, those skilled in the art should know that each module or each act of the present disclosure may be implemented by a universal computing device, and the modules or acts may be concentrated on a single computing device or distributed on a network formed by a plurality of computing devices, and may optionally be implemented by program codes executable for the computing devices, so that the modules or acts may be stored in a storage device for execution with the computing devices, the shown or described acts may be executed in sequences different from those described here in some circumstances, or may form each integrated circuit module respectively, or multiple modules or acts therein may form a single integrated circuit module for implementation. As a consequence, the present disclosure is not limited to any specific hardware and software combination.

The above is only the exemplary embodiment of the present disclosure and not intended to limit the present disclosure. For those skilled in the art, the present disclosure may have various modifications and variations. Any modifications, equivalent replacements, improvements and the like made within the principle of the present disclosure shall fall within the scope of protection defined by the appended claims of the present disclosure.

### Industrial Applicability

As mentioned above, the method and device for creating the application announcement resource provided by the embodiments of the present disclosure have the following beneficial effects. The condition that resource announcement is required to be limited by whether a parent resource has been announced or not is eliminated, and announcement flexibility is further ensured.

## Claims

1. A method for creating an application announcement resource, comprising:
receiving, by a registration Common Service Entity, CSE, a request message from a sender, wherein the request message carries a resource to be announced and an announcement target, and the announcement target is an identifier of a remote CSE to which the resource to be announced indicated by the sender is required to be announced (S302); and
indicating, by the registration CSE, a location of a resource to be created to the remote CSE according to the request message (S304),
wherein indicating, by the registration CSE, the location of the resource to be created to the remote CSE according to the request message (S304) comprises:
determining, by the registration CSE, the location of the resource to be created,
wherein a determination condition for determining the location of the resource to be created comprises at least one of:
whether a registration relationship exists between the registration CSE and the remote CSE or not;
whether a registration relationship exists between the registration CSE and the remote CSE or not and
whether a resource root directory of the registration CSE comprises an "announce to" attribute or not;
or whether a registration relationship exists between the registration CSE and the remote CSE or not, whether a resource root directory of the registration CSE comprises an "announce to" attribute or not and whether the "announce to" attribute comprises address information corresponding to the remote CSE or not;
and sending, by the registration CSE, a resource creation request message which carries the determined location of the resource to be created to the remote CSE;
wherein determining, by the registration CSE, the location of the resource to be created comprises:
when determining, by the registration CSE, that a registration relationship exists between the registration CSE and the remote CSE then setting, by the registration CSE, the location of the resource to be created as address information of a resource created when the registration CSE is registered on the remote CSE;
or when determining, by the registration CSE, that no registration relationship exists between the registration CSE and that the remote CSE and a resource root directory of the registration CSE does not comprise an "announce to" attribute then setting, by the registration CSE, the location of the resource to be created as address information of a root directory resource on the remote CSE;
or when determining, by the registration CSE, that no registration relationship exists between the registration CSE and the remote CSE, that a resource root directory of the registration CSE comprises an "announce to" attribute and the "announce to" attribute does not comprise address information corresponding to the remote CSE
then setting, by the registration CSE, the location of the resource to be created as address information of a root directory resource on the remote CSE;
or when determining, by the registration CSE, that no registration relationship exists between the registration CSE and the remote CSE, that a resource root directory of the registration CSE comprises an "announce to" attribute and the "announce to" attribute comprises address information corresponding to the remote CSE
then setting, by the registration CSE, the location of the resource to be created as address information of an announcement resource created when the registration CSE is announced to the remote CSE.

2. The method as claimed in claim 1, further comprising:
sending, by the registration CSE, the resource creation request message which further carries original resource address information to the remote CSE, wherein the original resource address information indicates an address of an original resource to be announced;
checking, by the remote CSE, whether there locally exists a resource with an attribute original resource link the same as the original resource address information carried in the resource creation request message or not after receiving the resource creation request message;
when there locally exists such resource, sending, by the remote CSE, a resource creation response message to the registration CSE, wherein the resource creation response message indicates that the resource to be created already exists; and
when there does not locally exist such resource, creating, by the remote CSE, the resource according to the location, indicated in the resource creation request message, of the resource to be created.

3. The method as claimed in any one of claims 1 to 2, wherein the request message received from the sender comprises: a resource updating request message or a resource creation request message.

4. A device for creating an application announcement resource, comprising:
a receiving module (10), arranged to receive a request message from a sender, wherein the request message carries a resource to be announced and an announcement target, and the announcement target is an identifier of a remote Common Service Entity, CSE, to which the resource to be announced indicated by the sender is required to be announced; and
an indication module (20), arranged to indicate a location of a resource to be created to the remote CSE according to the request message, wherein the indication module (20) comprises:
a determination unit (200), arranged to determine the location of the resource to be created,
wherein a determination condition for determining the location of the resource to be created comprises at least one of:
whether a registration relationship exists between the registration CSE and the remote CSE or not;
whether a registration relationship exists between the registration CSE and the remote CSE or not and
whether a resource root directory of the registration CSE comprises an "announce to" attribute or not;
or whether a registration relationship exists between the registration CSE and the remote CSE or not, whether a resource root directory of the registration CSE comprises an "announce to" attribute or not and whether the "announce to" attribute comprises address information corresponding to the remote CSE or not; and
a sending unit (202), arranged to send a resource creation request message which carries the determined location of the resource to be created to the remote CSE;
wherein the determination unit (200) comprises:
a first determination subunit, arranged to determine that a registration relationship exists between the registration CSE and the remote CSE; and
a first setting subunit, arranged to set the location of the resource to be created as address information of a resource created when the registration CSE is registered on the remote CSE; or
wherein the determination unit (200) comprises:
a second determination subunit, arranged to determine that no registration relationship exists between the registration CSE and that the remote CSE and a resource root directory of the registration CSE does not comprise an "announce to" attribute; and
a second setting subunit, arranged to set the location of the resource to be created as address information of a root directory resource on the remote CSE; or
wherein the determination unit (200) comprises:
a third determination subunit, arranged to determine that no registration relationship exists between the registration CSE and the remote CSE, that a resource root directory of the registration CSE comprises an "announce to" attribute and the "announce to" attribute does not comprise address information corresponding to the remote CSE; and
a third setting subunit, arranged to set the location of the resource to be created as address information of a root directory resource on the remote CSE; or
wherein the determination unit (200) comprises:
a fourth determination subunit, arranged to determine that no registration relationship exists between the registration CSE and the remote CSE, that a resource root directory of the registration CSE comprises an "announce to" attribute and the "announce to" attribute comprises address information corresponding to the remote CSE; and
a fourth setting subunit, arranged to set the location of the resource to be created as address information of an announcement resource created when the registration CSE is announced to the remote CSE.

5. The device as claimed in claim 4, wherein the sending unit (202) is arranged to send the resource creation request message which further carries original resource address information to the remote CSE, wherein the original resource address information indicates an address of an original resource to be announced.

## Patentansprüche

1. Verfahren zum Erstellen einer Anwendungsankündigungsressource, umfassend:
durch eine Registrierungs-Common-Service-Entität (Registrierungs-CSE) Empfangen einer Anforderungsnachricht von einem Absender, wobei die Anforderungsnachricht eine anzukündigende Ressource und ein Ankündigungsziel enthält und das Ankündigungsziel eine Kennung einer entfernten CSE ist, der die durch den Absender angegebene anzukündigende Ressource angekündigt werden muss (S302); und
durch die Registrierungs-CSE Angeben eines Standorts einer Ressource, die gemäß der Anforderungsnachricht für die entfernte CSE erstellt werden soll (S304),
wobei das Angeben des Standorts der Ressource, die gemäß der Anforderungsnachricht für die entfernte CSE erstellt werden soll, durch die Registrierungs-CSE (S304) umfasst:
durch die Registrierungs-CSE Ermitteln des Standorts der zu erstellenden Ressource,
wobei eine Ermittlungsbedingung für das Ermitteln des Standorts der zu erstellenden Ressource mindestens eines umfasst aus:
ob eine Registrierungsbeziehung zwischen der Registrierungs-CSE und der entfernten CSE existiert oder nicht;
ob eine Registrierungsbeziehung zwischen der Registrierungs-CSE und der entfernten CSE existiert oder nicht und
ob ein Ressourcenstammverzeichnis der Registrierungs-CSE ein "ankündigen gegenüber"-Attribut existiert oder nicht;
oder ob eine Registrierungsbeziehung zwischen der Registrierungs-CSE und der entfernten CSE existiert oder nicht, ob ein Ressourcenstammverzeichnis der Registrierungs-CSE ein "ankündigen gegenüber"-Attribut enthält oder nicht und ob das "ankündigen gegenüber"-Attribut Adressinformationen enthält, die der entfernten CSE entsprechen oder nicht; und durch die Registrierungs-CSE Senden einer Nachricht zur Ressourcenerstellung, die den ermittelten Standort der zu erstellenden Ressource zur entfernten CSE transportiert;
wobei das Ermitteln des Standorts der zu erstellenden Ressource durch die Registrierungs-CSE umfasst:
wenn durch die Registrierungs-CSE festgestellt wird, dass eine Registrierungsbeziehung zwischen der Registrierungs-CSE und der entfernten CSE existiert, durch die Registrierungs-CSE Festlegen des Standorts der zu erstellenden Ressource als Adressinformationen einer Ressource, die erstellt wird, wenn die Registrierungs-CSE auf der entfernten CSE registriert wird;
oder wenn durch die Registrierungs-CSE festgestellt wird, dass keine Registrierungsbeziehung zwischen der Registrierungs-CSE und der entfernten CSE existiert und ein Ressourcenstammverzeichnis der Registrierungs-CSE kein "ankündigen gegenüber"-Attribut umfasst, durch die Registrierungs-CSE Festlegen des Standorts der zu erstellenden Ressource als Adressinformationen einer Stammverzeichnisressource auf der entfernten CSE;
oder wenn durch die Registrierungs-CSE festgestellt wird, dass keine Registrierungsbeziehung zwischen der Registrierungs-CSE und der entfernten CSE existiert, dass ein Ressourcenstammverzeichnis der Registrierungs-CSE ein "ankündigen gegenüber"-Attribut umfasst und das "ankündigen gegenüber"-Attribut keine Adressinformationen umfasst, die der entfernten CSE entsprechen
durch die Registrierungs-CSE Festlegen des Standorts der zu erstellenden Ressource als Adressinformationen einer Stammverzeichnisressource auf der entfernten CSE;
oder wenn durch die Registrierungs-CSE festgestellt wird, dass keine Registrierungsbeziehung zwischen der Registrierungs-CSE und der entfernten CSE existiert, dass ein Ressourcenstammverzeichnis der Registrierungs-CSE ein "ankündigen gegenüber"-Attribut umfasst und das "ankündigen gegenüber"-Attribut Adressinformationen umfasst, die der entfernten CSE entsprechen
durch die Registrierungs-CSE Festlegen des Standorts der zu erstellenden Ressource als Adressinformationen einer Ankündigungsressource, die erstellt wird, wenn die Registrierungs-CSE der entfernten CSE angekündigt wird.

2. Verfahren nach Anspruch 1, ferner umfassend:
durch die Registrierungs-CSE Senden der Nachricht zur Ressourcenerstellung, die ferner die ursprünglichen Ressourcenadressinformationen zur entfernten CSE transportiert, wobei die ursprünglichen Ressourcenadressinformationen eine Adresse einer anzukündigenden ursprünglichen Ressource angeben;
durch die entfernten CSE Überprüfen, ob lokal eine Ressource mit einem ursprünglichen Ressourcen-Attributlink existiert oder nicht, der mit den ursprünglichen Ressourcenadressinformationen übereinstimmt, die in der Anforderungsnachricht zur Ressourcenerstellung transportiert wurde oder nicht, nachdem die Anforderungsnachricht zur Ressourcenerstellung empfangen wurde;
wenn eine solche Ressource lokal existiert, durch die entfernte CSE Senden einer Antwortnachricht zur Ressourcenerstellung an die Registrierungs-CSE, wobei die Antwortnachricht zur Ressourcenerstellung angibt, dass die zu erstellende Ressource bereits existiert; und
wenn eine solche Ressource lokal nicht existiert, durch die entfernte CSE Erstellen der Ressource gemäß dem in der Anforderungsnachricht zur Ressourcenerstellung angegebenen Standort der zu erstellenden Ressource.

3. Verfahren nach einem der Ansprüche 1 bis 2, wobei die vom Absender empfangene Anforderungsnachricht umfasst: eine Anforderungsnachricht zur Ressourcenaktualisierung oder eine Anforderungsnachricht zur Ressourcenerstellung.

4. Vorrichtung zum Erstellen einer Anwendungsankündigungsressource, umfassend:
ein Empfangsmodul (10), das eingerichtet ist, um eine Anforderungsnachricht von einem Absender zu empfangen, wobei die Anforderungsnachricht eine anzukündigende Ressource und ein Ankündigungsziel transportiert und das Ankündigungsziel eine Kennung einer entfernten Common-Service-Entität (CSE) ist, der die vom Absender angegebene anzukündigende Ressource angekündigt werden muss; und
ein Angabemodul (20), das eingerichtet ist, um einen Standort einer Ressource anzugeben, die für die entfernte CSE gemäß der Anforderungsnachricht erstellt werden soll, wobei das Angabemodul (20) umfasst:
eine Ermittlungseinheit (200), die eingerichtet ist, um den Standort der zu erstellenden Ressource zu ermitteln,
wobei eine Ermittlungsbedingung zum Ermitteln des Standorts der zu erstellenden Ressource mindestens eines umfasst aus:
ob eine Registrierungsbeziehung zwischen der Registrierungs-CSE und der entfernten CSE existiert oder nicht;
ob eine Registrierungsbeziehung zwischen der Registrierungs-CSE und der entfernten CSE existiert oder nicht und
ob ein Ressourcenstammverzeichnis der Registrierungs-CSE ein "ankündigen gegenüber"-Attribut existiert oder nicht;
oder ob eine Registrierungsbeziehung zwischen der Registrierungs-CSE und der entfernten CSE besteht oder nicht, ob ein Ressourcenstammverzeichnis der Registrierungs-CSE ein "ankündigen gegenüber"-Attribut enthält oder nicht und ob das "ankündigen gegenüber"-Attribut Adressinformationen enthält, die der entfernten CSE entsprechen oder nicht; und
eine Sendeeinheit (202), die eingerichtet ist, um eine Anforderungsnachricht zur Ressourcenerstellung zu senden, die den festgestellten Standort der zu erstellenden Ressource zur entfernten CSE transportiert;
wobei das Ermittlungsmodul (200) umfasst:
eine erste Ermittlungsuntereinheit, die eingerichtet ist, um festzustellen, dass eine Registrierungsbeziehung zwischen der Registrierungs-CSE und der entfernten CSE existiert; und
eine erste Festlegungsuntereinheit, die eingerichtet ist, um den Standort der zu erstellenden Ressource als Adressinformationen einer Ressource festzulegen, die erstellt wird, wenn die Registrierungs-CSE auf der entfernten CSE registriert wird; oder
wobei das Ermittlungsmodul (200) umfasst:
eine zweite Ermittlungsuntereinheit, die eingerichtet ist, um festzustellen, dass keine Registrierungsbeziehung zwischen der Registrierungs-CSE existiert und dass die entfernte CSE und ein Ressourcenstammverzeichnis der Registrierungs-CSE kein "ankündigen gegenüber"-Attribut umfassen; und
eine zweite Festlegungsuntereinheit, die eingerichtet ist, um den Standort der zu erstellenden Ressource als Adressinformationen einer Stammverzeichnisressource auf der entfernten CSE festzulegen; oder
wobei das Ermittlungsmodul (200) umfasst:
eine dritte Ermittlungsuntereinheit, die eingerichtet ist, um festzustellen, dass keine Registrierungsbeziehung zwischen der Registrierungs-CSE und der entfernten CSE existiert, dass ein Ressourcenstammverzeichnis der Registrierungs-CSE ein "ankündigen gegenüber"-Attribut umfasst und das "ankündigen gegenüber"-Attribut keine Adressinformationen umfasst, die der entfernten CSE entsprechen; und
eine dritte Festlegungsuntereinheit, die eingerichtet ist, um den Standort der zu erstellenden Ressource als Adressinformationen einer Stammverzeichnisressource auf der entfernten CSE festzulegen; oder
wobei das Ermittlungsmodul (200) umfasst:
eine vierte Ermittlungsuntereinheit, die eingerichtet ist, um festzustellen, dass keine Registrierungsbeziehung zwischen der Registrierungs-CSE und der entfernten CSE existiert, dass ein Ressourcenstammverzeichnis der Registrierungs-CSE ein "ankündigen gegenüber"-Attribut umfasst und das "ankündigen gegenüber"-Attribut Adressinformationen umfasst, die der entfernten CSE entsprechen; und
eine vierte Festlegungsuntereinheit, die eingerichtet ist, um den Standort der zu erstellenden Ressource als Adressinformationen einer Ankündigungsressource festzulegen, die erstellt wird, wenn die Registrierungs-CSE der entfernten CSE angekündigt wird.

5. Vorrichtung nach Anspruch 4, wobei die Sendeeinheit (202) eingerichtet ist, um die Anforderungsnachricht zur Ressourcenerstellung zu senden, die ferner ursprüngliche Ressourcenadressinformationen zur entfernte CSE transportiert, wobei die ursprünglichen Ressourcenadressinformationen eine Adresse einer anzukündigenden ursprünglichen Ressource angeben.

## Revendications

1. Procédé de création d'une ressource d'annonce d'application, comprenant :
la réception, par une Entité de service commun, CSE, d'enregistrement, d'un message de demande provenant d'un expéditeur, le message de demande portant une ressource à annoncer et une cible d'annonce et la cible d'annonce étant un identifiant d'une CSE distante à laquelle doit être annoncée la ressource à annoncer indiquée par l'expéditeur (S302) ; et
l'indication, par la CSE d'enregistrement, d'un emplacement d'une ressource à créer à la CSE distante en fonction du message de demande (S304),
l'indication, par la CSE d'enregistrement, de l'emplacement de la ressource à créer à la CSE distante selon le message de demande (S304) comprenant :
la détermination, par la CSE d'enregistrement, de l'emplacement de la ressource à créer, une condition de détermination permettant de déterminer l'emplacement de la ressource à créer comprenant au moins un des éléments suivants :
s'il existe ou non une relation d'enregistrement entre la CSE d'enregistrement et la CSE distante ;
s'il existe ou non une relation d'enregistrement entre la CSE d'enregistrement et la CSE distante et
si un répertoire racine de ressources de la CSE d'enregistrement comprend ou non un attribut « annonce à » ;
ou s'il existe ou non une relation d'enregistrement entre la CSE d'enregistrement et la CSE distante, si un répertoire racine de ressource de la CSE d'enregistrement comprend un attribut « annonce à » ou non et si l'attribut « annonce à » comprend des informations d'adresse correspondant à la CSE distante ou non ; et l'envoi, par la CSE d'enregistrement, d'un message de demande de création de ressource qui porte l'emplacement déterminé de la ressource à créer à la CSE distante ;
la détermination, par la CSE d'enregistrement, de l'emplacement de la ressource à créer comprenant :
lors de la détermination, par la CSE d'enregistrement, qu'il existe une relation d'enregistrement entre la CSE d'enregistrement et la CSE distante, alors la définition, par la CSE d'enregistrement, de l'emplacement de la ressource à créer comme informations d'adresse d'une ressource créée lorsque la CSE d'enregistrement est enregistrée sur la CSE distante ;
ou lors de la détermination, par la CSE d'enregistrement, qu'il n'existe aucune relation d'enregistrement entre la CSE d'enregistrement et que la CSE distante et un répertoire racine de ressource de la CSE d'enregistrement ne comprend pas d'attribut « annonce à », alors la définition, par la CSE d'enregistrement, de l'emplacement de la ressource à créer comme informations d'adresse d'une ressource de répertoire racine sur la CSE distante ;
ou lors de la détermination, par la CSE d'enregistrement, qu'il n'existe aucune relation d'enregistrement entre la CSE d'enregistrement et la CSE distante, qu'un répertoire racine de ressource de la CSE d'enregistrement comprend un attribut « annonce à » et que l'attribut « annonce à » ne comprend pas d'informations d'adresse correspondant à la CSE distante
alors la définition, par la CSE d'enregistrement, de l'emplacement de la ressource à créer comme informations d'adresse d'une ressource de répertoire racine sur la CSE distante ;
ou lors de la détermination, par la CSE d'enregistrement, qu'il n'existe aucune relation d'enregistrement entre la CSE d'enregistrement et la CSE distante, qu'un répertoire racine de ressources de la CSE d'enregistrement comprend un attribut « annonce à » et l'attribut « annonce à » comprend des informations d'adresse correspondant à la CSE distante,
alors la définition, par la CSE d'enregistrement, de l'emplacement de la ressource à créer comme informations d'adresse d'une ressource d'annonce créée lorsque la CSE d'enregistrement est annoncée à la CSE distante.

2. Procédé selon la revendication 1, comprenant en outre :
l'envoi, par la CSE d'enregistrement, du message de demande de création de ressource qui transporte en outre des informations d'adresse de ressource d'origine à la CSE distante, les informations d'adresse de ressource d'origine indiquant une adresse d'une ressource d'origine à annoncer ;
la vérification, par la CSE distante, de l'éventuelle existence locale ou non d'une ressource avec un lien de ressource d'origine d'attribut identique aux informations d'adresse de ressource d'origine portées dans le message de demande de création de ressource après réception du message de demande de création de ressource ;
lorsqu'il existe localement une telle ressource, l'envoi, par la CSE distante, d'un message de réponse de création de ressource à la CSE d'enregistrement, le message de réponse de création de ressource indiquant que la ressource à créer existe déjà ; et
lorsqu'une telle ressource n'existe pas localement, la création, par la CSE distante, de la ressource en fonction de l'emplacement, indiqué dans le message de demande de création de ressource, de la ressource à créer.

3. Procédé selon l'une quelconque des revendications 1 à 2, dans lequel le message de demande reçu en provenance de l'expéditeur comprend : un message de demande de mise à jour de ressource ou un message de demande de création de ressource.

4. Dispositif de création d'une ressource d'annonce d'application, comprenant :
un module de réception (10), agencé pour recevoir un message de demande d'un expéditeur, le message de demande portant une ressource à annoncer et une cible d'annonce et la cible d'annonce étant un identifiant d'une Entité de service commune, CSE, distante, à laquelle doit être annoncée la ressource à annoncer indiquée par l'expéditeur ; et
un module d'indication (20), agencé pour indiquer un emplacement d'une ressource à créer à la CSE distante selon le message de demande, le module d'indication (20) comprenant :
une unité de détermination (200), agencée pour déterminer l'emplacement de la ressource à créer,
une condition de détermination permettant de déterminer l'emplacement de la ressource à créer comprenant au moins un des éléments suivants :
s'il existe ou non une relation d'enregistrement entre la CSE d'enregistrement et la CSE distante ;
s'il existe ou non une relation d'enregistrement entre la CSE d'enregistrement et la CSE distante et
si un répertoire racine de ressources de la CSE d'enregistrement comprend ou non un attribut « annonce à » ;
et/ou s'il existe ou non une relation d'enregistrement entre la CSE d'enregistrement et la CSE distante, si un répertoire racine de ressource de la CSE d'enregistrement comprend ou non un attribut « annonce à » et si l'attribut « annonce à » comprend des informations d'adresse correspondant à la CSE distante ou non ; et
une unité d'envoi (202), agencée pour envoyer un message de demande de création de ressource qui porte l'emplacement déterminé de la ressource à créer à la CSE distante ;
l'unité de détermination (200) comprenant :
une première sous-unité de détermination, agencée pour déterminer qu'une relation d'enregistrement existe entre la CSE d'enregistrement et la CSE distante ; et
une première sous-unité de définition, agencée pour définir l'emplacement de la ressource à créer comme informations d'adresse d'une ressource créée lorsque la CSE d'enregistrement est enregistrée sur la CSE distante ; ou
l'unité de détermination (200) comprenant :
une deuxième sous-unité de détermination, agencée pour déterminer qu'il n'existe aucune relation d'enregistrement entre la CSE d'enregistrement et que la CSE distante et un répertoire racine de ressource de la CSE d'enregistrement ne comprend pas d'attribut « annonce à » ; et
une deuxième sous-unité de définition, agencée pour définir l'emplacement de la ressource à créer comme informations d'adresse d'une ressource de répertoire racine sur la CSE distante ; ou
l'unité de détermination (200) comprenant :
une troisième sous-unité de détermination, agencée pour déterminer qu'aucune relation d'enregistrement n'existe entre la CSE d'enregistrement et la CSE distante, qu'un répertoire racine de ressource de la CSE d'enregistrement comprend un attribut « annonce à » et l'attribut « annonce à » ne comprend pas d'informations d'adresse correspondant à la CSE distante ; et
une troisième sous-unité de définition, agencée pour définir l'emplacement de la ressource à créer comme informations d'adresse d'une ressource de répertoire racine sur la CSE distante ; ou
l'unité de détermination (200) comprenant :
une quatrième sous-unité de détermination, agencée pour déterminer qu'il n'existe aucune relation d'enregistrement entre la CSE d'enregistrement et la CSE distante, qu'un répertoire racine de ressource de la CSE d'enregistrement comprend un attribut « annonce à » et l'attribut « annonce à » comprend des informations d'adresse correspondant à la CSE distante ; et
une quatrième sous-unité de définition, agencée pour définir l'emplacement de la ressource à créer comme informations d'adresse d'une ressource d'annonce créée lorsque la CSE d'enregistrement est annoncé à la CSE distante.

5. Dispositif selon la revendication 4, dans lequel l'unité d'envoi (202) est agencée pour envoyer le message de demande de création de ressource qui transporte en outre des informations d'adresse de ressource d'origine à la CSE distante, les informations d'adresse de ressource d'origine indiquant une adresse d'une ressource d'origine à annoncer.
